Europäisches Patentamt

European Patent Office

Office européen des brevets

(19)

(11) Numéro de publication: **0 037 761**
**B1**

(12) **FASCICULE DE BREVET EUROPEEN**

(45) Date de publication du fascicule du brevet: **28.09.83**

(51) Int. Cl.³: **G 01 N 21/55**

(21) Numéro de dépôt: **81400428.9**

(22) Date de dépôt: **19.03.81**

(54) **Méthode de mesure de la réflectance globale d'un échantillon et réflectomètre de mise en oeuvre.**

(30) Priorité: **31.03.80 FR 8007136**

(43) Date de publication de la demande:
**14.10.81 Bulletin 81/41**

(45) Mention de la délivrance du brevet:
**28.09.83 Bulletin 83/39**

(84) Etats contractants désignés:
**AT BE CH DE GB IT LI LU NL SE**

(56) Documents cités:
**FR - A - 1 465 448**

**MEASUREMENT OF THERMAL RADIATION
PROPERTIES OF SOLIDS, NASA SP-31 1963 ed.
NASA Washington, D.C., US W. FUSSELL et al.:
"Portable integrating sphere for monitoring
reflectance of spacecraft coatings", pages
103—116
AIAA JOURNAL, vol. 4, no. 7, juillet 1966 G.
ZERLAUT et al.: "An integrating sphere
relfectometer for the determination of absolute
hemispherical spectral reflectance", pages
1227—1230**

(73) Titulaire: **CENTRE NATIONAL D'ETUDES
SPATIALES
129, Rue de l'Université
F-75007 Paris (FR)**

(72) Inventeur: **Buisson, J.P. Certs - Derts Onera
2, avenue Edouard Belin
F-31000 Toulouse (FR)**
Inventeur: **Riboulet, M. Certs-Derts Onera
2, avenue Edouard Belin
F-31000 Toulouse (FR)**

(74) Mandataire: **Loyer, Bertrand et al,
Cabinet Pierre Loyer 18, rue de Mogador
F-75009 Paris (FR)**

(56) Documents cités:
**PRECISION MEASUREMENT AND
CALIBRATION, RADIOMETRY AND
PHOTOMETRY NBS SP-300, vol. 7, 1971 ed.
NBS, Washington, DC, US S. THOMAS DUNN et
al.: "Ellipsoidal mirror reflectometer", pages
490—503**

Courier Press, Leamington Spa, England.

Méthode de mesure de la réflectance globale d'un échantillon et réflectomètre de mise en oeuvre

L'invention se rapporte à une méthode de mesure de la réflectance globale d'un échantillon ainsi qu'au reflectomètre de mise en oeuvre de ladite méthode et notamment à la détermination de la réflectance en lumière solaire.

Lorsque l'on désire connaître la réflectance d'un corps on fait le plus souvent appel à le spectrophotométrie afin de déterminer en fonction des longueurs d'ondes les valeurs des rayonnements incidents et des rayonnements transmis et réflechis.

Cette méthode est longue et nécessite un matériel lourd.

Afin de réduire le temps des mesures tout en conservant une grande sensibilité et une grande précision le brevet français 1.465.448 préconise l'emploi d'un dispositif permettant d'éclairer successivement un échantillon dont la réflectance est à mesurer et un échantillon de réflectance connue. Ces deux objets sont disposés sur une sphère pourvue de deux orifices pour le passage des rayone qu'ils réfléchissent et que l'on fait converger à travers des filtres sur une cellule photoélectrique.

De tels appareils sont cependant inaptes à la détermination instantanée d'une mesure absolue de la réflectance globale et d'autre part la méthode même de mesure des réflectances relatives des échantillons empêche la création d'appareils compacts susceptibles d'être aisément déplacés sur toutes surfaces.

On connait encore un dispositif décrit à l'article de W. B. Fussel et J. J. Triolo relatif à une "Sphère intégrante portable pour contrôler la réflectance des revêtements spatiaux" pages 103 à 116 de NASA SP-31 1963 cependant, la méthode mise en jeu par ce dispositif qui utilise un photomultiplicateur exige un grand nombre de mesures ne permettant ni d'obtenir la réflectance solaire, ni d'obtenir des mesures de réflectance instantanees et complètes.

De même on connait un dispositif décrit à l'article de S. Thomas Dunn et Joseph C. Richmond relatif à un "Réflectomètre à miroir elliptique" dans NBS SP-300, vol. 7, 1971 ed. NBS, Washington, DC, US, pages 490 à 503— dont un mode de realisation comprend une sphère intégrante pour obtenir la moyenne du flux lumineux, où le rayonnement global exclusif de ladite sphère est mesuré par une thermopile. Cependant ce matériel est encore un matériel lourd de laboratoire et par conséquent non portable, la méthode de mesure des réflectances exigeant un calcul mathématique important.

L'objet de l'invention est une méthode de détermination instantanée de la mesure absolue de la réflectance globale hemisphérique d'un échantillon à une lumière donnée selon laquelle on éclaire l'échantillon à étudier au moyen d'une source d'éclairement et de moyens optiques, l'échantillon à étudier étant disposé prealablement sur une fenêtre d'une sphère intégrante et selon laquelle on étudie le rayonnement de la sphère intégrante en tenant compte de la puissance Ps connue ou déterminée de la source d'éclairement, du coefficient d'énergie lumineuse parasite $K_p$ correspondant à l'énergie parasite provenant des moyens optiques en absence d'échantillon et du coefficient constant $K_o$ d'énergie lumineuse satisfaisant à la relation $V_{ET}=K_oPs$ où $V_{ET}$ est une tension correspondant à l'éclairement d'un échantillon étalon de réflectance connue caractérisé en ce que l'on choisit comme source d'éclairement un tube à éclat de même répartition spectrale, ou de répartition spectrale aussi voisine qu'on le désire de la lumière donnée, en ce que l'on choisit comme moyen de mesure du rayonnement global exclusif de ladite sphère une thermopile de mesure, en ce que la détermination des valeurs $V_{ET}=K_oPs$ et $K_p$ s'effectuent une fois pour toute par l'éclairement de l'échantillon étalon de réflectance connue et par l'éclairement de la sphère en absence d'échantillon, l'éclairement de tout nouvel échantillon dont la réflectance est à mesurer s'accompagnant de l'enregistrement simultané des tensions fournies par une thermopile de référence revevant directement une fraction de la puissance de la source d'éclairement et par la thermopile de mesure utilisée pour la détermination dudit rayonnement de ladit sphère intégrante.

Ainsi ayant déterminé au préalable et une fois pour toute la réflectance globale d'un échantillon de réference il suffit par simple lecture de la valeur du rayonnement mesuré par la thermopile et donné par tout dispositif approprié de connaître la réflectance globale hémisphérique de l'échantillon pour une lumière donnée.

Une telle méthode est particulièrement utile dans le cas où l'on désire effectuer une mesure absolue approchée de la réflectance solaire globale et hémisphérique, d'un échantillon comme cela se produit pour les applications tant spatiales que terrestres mettant en jeu les constantes thermo-optiques de revêtements et de matériaux les plus divers.

La réflectance solaire étant donnée par la formule

$$\rho=\frac{\int_{0,2}^{2,8}\rho(\lambda)\,S(\lambda)\,d\lambda}{\int_{0,2}^{2,8}S(\lambda)\,d\lambda}$$

où $\rho$ est la réflectance globale solaire

et $\rho(\lambda)$ la réflectance spectrale solaire, $S(\lambda)$ étant l'éclairement énergétique monochromatique solaire, on choisit selon l'invention une source intense dont la répartition spectrale

$$\int_{0,3}^{2,5} X_e(\lambda) \, d\lambda$$

est en valeur relative, proche de celle du soleil. C'est notamment le cas de l'éclairement énergétique spectrale d'un tube à éclats au Xénon. L'expérience montre que la reproductibilite des mesures selon la méthode objet de l'invention est à $\pm 1\%$.

Une autre caractéristique de la méthode est de conserver une précision des mesures en dépit des variations possibles d'intensité de la source choisie d'un éclat à l'autre par la mesure simultanée de l'énergie réfléchie et de l'énergie de la source.

Un autre objet de l'invention est un reflectomètre portable de mise en oeuvre de la méthode de mesure de réflectance globale d'un échantillon comportant dans un premier boîtier la source d'éclairement, des moyens optiques avec une optique de focalisation pour diriger une première partie du flux lumiueux de la sourse d'éclairement sur un point de l'échantillon et une sphère intégrante pourvue de trois fenêtres l'une pour la pénétration du faisceau incident dans la sphère, une autre pour l'éclairement de l'échantillon dont le rayonnement réfléchi direct est dirigé hors des positions des fenêtres et une troisième fenêtre pour la mesure du rayonnement caractérisé en ce que ladite troisième fenêtre contient une thermopile de mesure répondant à la bande de fréquence d'un tube à éclat constituant la source d'éclairement et en ce qu'une thermopile de référence dont la surface sensible est dirigée vers la source d'éclairement est incorporée dans un bloc contenant la sphère intégrante.

On réalise ainsi une tête de mesure trèe légère permettant à l'opérateur de la disposer aisément aux lieux de mesure, l'appareillage électronique de lecture des mesures de rayonnement transmises par la thermopile et raccordé par câble, pouvant rester immobile pendant les divers déplacements de la tête de mesure.

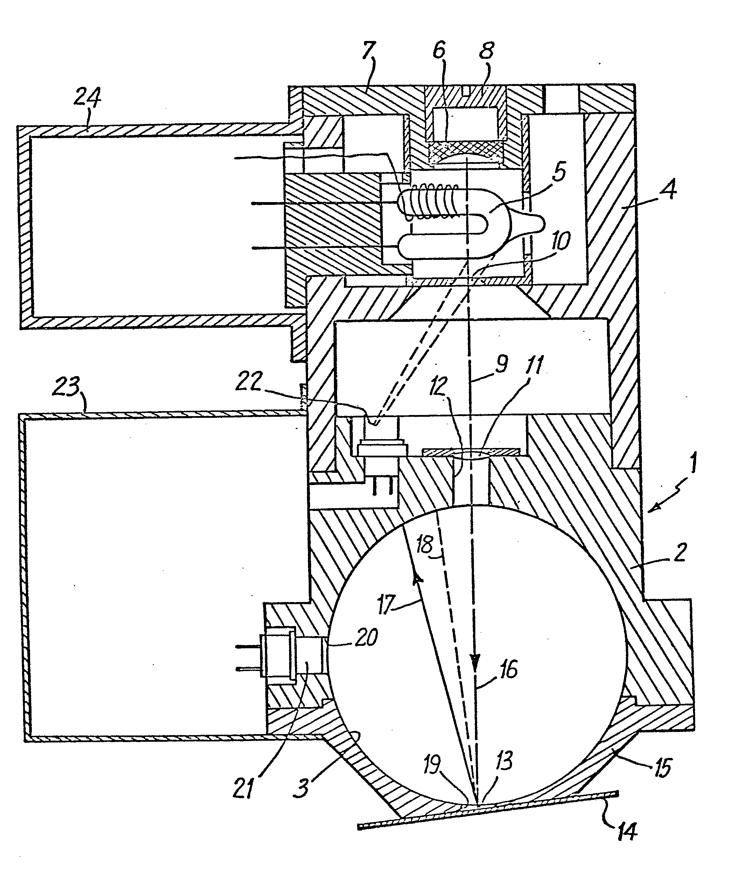

D'autres avantages et caractéristiques de l'invention apparaîtront au cours de la déscription suivante faite en référence au dessin annexé qui représente à titre d'exemple non limitatif un mode de réalisation de l'invention.

Sur le dessin

La figure unique est une vue en coupe horizontale de la tête de mesure.

Le boîtier du réflectomètre désigné par la référence générale 1 sur la figure comprend principalement une partie 2 incluant la sphère intégrante 3 et une partie opposée 4 incluant le tube à éclats photographique 5.

Un miroir concave 6, porté sur la pièce terminale 7 est retenu par la pièce de fixation 8. Son axe optique 9 coïncide avec l'axe du diaphragme 10 et de l'optique de focalisation 11 montée dans l'ouverture 12 du bloc 2 formant la première fenêtre de la sphère 3. L'optique 11 focalise la lumière incidente sur le point 13 de l'échantillon 14 reposant sur un méplat incliné de la partie extrême 15 du boitier 1 opposée à la pièce terminale 7 et bordant la seconde fenêtre 19 de la sphère 3.

En raison de cette inclinaison, les rayons incidents 16 coïncidant avec l'axe optique 9, sont réfléchis en un pinceau 17 suffisamment écarté de l'axe optique 9 pour ne pas repasser par la fenêtre 12, la normale 18 à la surface de l'échantillon 14 issue du point 13 ne pouvant intercepter la fenêtre 12 par construction.

En outre, la normale 18 étant suffisamment proche de la fenêtre 12 les rayons 17 ne peuvent non plus atteindre la troisième fenêtre 20 de la sphère 3 dans laquelle se trouve logée la thermopile de mesure 21.

Afin d'obtenir des mesures de rayonnement au moyen de la thermopile 21 aussi exactes qu'on le désire, la surface de la sphère 3 est recouverte d'une peinture blanche parfaitement diffusante. A titre d'exemple le revêtement blanc a une caractéristique de réflexion spectrale constante entre $0,3 \, \mu$ et $2,1 \, \mu$.

En outre, le niveau de luminosité de la lampe à éclat 5 étant susceptible de varier, une thermopile de référence 22 est disposée dans le bloc comprenant la sphère 3 de façon à viser, à travers le diaphragme 10, une partie de la lampe à éclat et de façon à être protégée thermiquement comme la thermopile de mesure 21 par la masse du bloc 2. Les préamplificateurs des tensions transmises par les thermopiles de mesure 21 et de référence 22 sont logées dans le boitier contigü 23.

Le boitier supérieur 24 contient le dispositif haute tension d'excitation de la lampe à éclat 5.

Ayant choisi une source de lumière dont la répartition spectrale de la lumière émise correspond à celle que l'on désire, par exemple une lampe à éclat au Xénon dans l'étude de la réflectance de matériaux à la lumière solaire, on mesure ie coefficient d'énergie lumineuse parasite $K_p$, correspondant à l'énergie parasite provenant de la diffusion dûe à l'optique de focalisation 11.

A cet effet, connaissant la puissance Ps de la source lumineuse 5 on mesure lors d'un éclat de cette source la tension $V_{Kp} = Ps \cdot K_p$ obtenue après amplification de la tension recueillie par la thermopile de mesure 21 lorsque la fenêtre 19 n'est occultée par aucun échantillon.

De même connaissant la valeur de Ps ainsi que la réflectance d'une référence connue fournie par un échantillon étalon, on détermine la valeur constante $K_o$ du coefficient d'énergie lumineuse tel que la tension $V_{ET}$ fournie par l'appareil de mesure soit égale à $K_o Ps$.

Dans ces conditions, il suffit après étalonnage de l'appareil de mesure de remplacer l'échantillon étalon de référence par l'échantillon dont on désire connaître la réflectance globale et de commander la lampe à éclat pour obtenir une tension $V_{EC}$ donnée par la thermopile de mesure 21 et égale à Ps $(K_f+K_p)$ où $K_f$ est le coefficient d'énergie lumineuse réfléchie.

Connaissant déjà $K_p$ ainsi que $K_oPs$ par $V_{ET}$ il est aisé de déterminer $K_f$. La valeur Ps est connue à chaque éclat au moyen de la thermopile de référence 22, de sorte que connaissant la valeur Ps primitive lors de la détermination de $K_o$ il est possible d'évaluer $K_f$ quelle que soit la variation de Ps. Au cours de la mesure de la réflectance globale d'un échantillon les tensions fournies par les thermopiles 21 et 22 dépendant de la même source, on peut en raison de la précision des mesures et lorsque les valeurs Ps ne peuvent pas s'écarter de plus d'un certain pourcentage éviter la comparaison avec la valeur retenue de Ps lors de l'étalonnage. Le rapport des tensions fournies par les thermopiles 21 et 22 permettant ainsi d'éliminer Ps, on obtient aisement $K_f$.

Il va de soi que ces calculs peuvent être réalisés automatiquement par tout moyen, qu'il s'agisse de mesures purement analogiques, de mesures purement numériques après conversion des valeurs analogiques fournies par les tensions $V_{EC}$ et $V_{ET}$, ou encore par des calculs mixtes.

## Revendications

1. Méthode de détermination instantanée de la mesure absolue de la réflectance globale hémisphérique d'un échantillon à une lumière donnés selon laquelle on éclaire l'échantillon à étudier au moyen d'une source d'éclairement et de moyens optiques, l'échantillon à étudier étant disposé préalablement sur une fenêtre d'une sphère intégrante et selon laquelle on étudie le rayonnement de la sphère intégrante en tenant compte de la puissance Ps connue ou déterminée de la source d'éclairement, du coefficient d'énergie lumineuse parasite $K_p$ correspondant à l'énergie parasite provenant des moyens optiques en absence d'échantillon et du coefficient constant $K_o$ d'énergie lumineuse satisfaisant à la relation $V_{ET}=K_oPs$ où $V_{ET}$ est une tension correspondant à l'éclairement d'un échantillon étalon de réflectance connue, caractérisé en ce que l'on choisit comme source d'éclairement un tube à éclat de même répartition spectrale, ou de répartition spectrale aussi voisine qu'on le désire de la lumière donnée, en ce que l'on choisit comme moyen de mesure du rayonnement global exclusif de ladite sphère une thermopile de mesure, en ce que la détermination des valeurs $V_{ET}=K_oPs$ et $K_p$ s'effectuent une fois pour toute par l'éclairement de l'échantillon étalon de réflectance connue et par l'éclairement de la sphère en absence d'échantillon, l'éclairement de tout nouvel échantillon dont la réflectance est à mesurer s'accompagnant de l'enregistrement simultané des tensions fournies par une thermopile de référence recevant directement une fraction de la puissance de la source d'éclairement et par la thermopile de mesure utilisée pour la détermination dudit rayonnement de ladit sphère intégrante.

2. Méthode telle que revendiquée en 1 selon laquelle on procède à la correction de la valeur de la réflectance obtenue par éclairement de l'échantillon lorsque l'écart entre la puissance Ps enregistrée lors de l'étalonnage et la puissance enregistrée lors de l'éclairement de mesure est supérieure à une valeur donnée.

3. Méthode de détermination de la réflectance globale à la lumière solaire et telle que revendiquée dans l'une quelconque des revendications 1 et 2 selon laquelle on choisit un tube à éclat a yant une répartition spectrale voisine de la répartition spectrale au sol du rayonnement solaire dans la bande comprise entre 0,3 $\mu$ et 2,5 $\mu$.

4. Réflectomètre portable de mise en oeuvre de la méthode de mesure de réflectance globale d'un échantillon revendiquée dans l'une quelconque des revendications 1 à 3 comportant dans un premier boîtier (2,4) la source d'éclairement (5), des moyens optiques avec une optique de focalisation (11) pour diriger une première portie du flux lumineux de la source d'éclairement sur un point (13) de l'échantillon (14), et une sphère intégrante (3) pourvue de trois fenêtres l'une (12) pour la pénétration du faisceau incident dans la sphère, une autre (19) pour l'éclairement de l'échantillon dont le rayonnement réfléchi direct est dirigé hors des positions des fenêtres et une troisième fenêtre (20) pour la mesure du rayonnement caractérisé en ce que ladite troisième fenêtre contient une thermopile de mesure, (21) repondant à la bande de fréquence d'un tube à éclat (5) constituant la source d'éclairement, et en ce que une thermopile de référence (22), dont la surface sensible est dirigée vers la source d'éclairement (5), est incorporée dans un bloc (2) contenant la sphère intégrante (3).

5. Réflectomètre tel que revendiqué en 4 comportant, au voisinage de la source d'éclairement (5) un deuxième boîtier (24) d'alimentation haute tension de la source d'éclairement et, au voisinage de la sphère intégrante (3), un troisième boîtier (23) de préamplification de la thermopile de mesure (21), utilisée pour la détermination du rayonnement de la sphère intégrante (3), et de la thermopile (22) de referance utilisée pour la détermination de la puissance reçue directement d'une deuxième partie du flux lumineux de la source (5) à travers un diaphragme (10) utilisé par l'optique de focalisation (11) de la première pastie du flux lumineux sur l'échantillon (14).

## Patentansprüche

1. Methode zur Sofortbestimmung des Absolutwertes des Gesamt-Halbkugel-Weissgehalts eines Musters in einem gegebenen Licht, nach der das zu untersuchende Muster mit Hilfe einer Lichtquelle und optischen Mitteln beleuchtet wird, wobei das zu untersuchende Muster vorher auf das Fenster einer integrierende Kugel gelegt wird und nach der die Strahlung der integrierenden Kugel unter Berücksichtigung der bekannten oder bestimmten Leistung Ps der Lichtquelle, des Störbeiwertes $K_p$ der Leuchtenergie aus den optischen Geräten in Abwesenheit eines Musters und des konstanten Beiwertes $K_o$ der Leuchtenergie nach der Gleichung $V_{ET}=K_oPs$, in der $V_{ET}$ eines Spannung derstellt, die der Beleuchtung eines Eichmusters bekannten Weissgehaltes entspricht, dadurch gekennziechnet, dass man als Beleuchtungsquelle eine Blitzröhre verwendet, die die gleiche Spektralverteilung oder eine dem gewünschten gegebenen Licht möglichst nahekommende Spektralverteilung aufweist, indem man als Mittel zur Messung des ausschliesslichen Gesamtstrahlung dieser Kugel eine Mess-Wärme-Batterie verwendet, wobei die Bestimmung der Werte $V_{ET}=K_oPs$ und $K_p$ ein für alle Male durch eine Beleuchtung des Eichmusters bekannten Weissgehaltes und durch eine Beleuchtung der Kugel in Abwesenheit eines Musters erfolgt, während die Beleuchtung jedes neuen Musters, dessen Weissgehalt zu messen ist, unter gleichzeitiger Aufzwichnung der Spannungen erfolgen muss, die von einer Referenz-Wärme-Batterie geliefert werden, die direkt mit einem Teil der Leistung der Beleuchtungsquelle beaufschlagt wird, sowie von der zur Bestimmung ieser Strahlung dieser integrierenden Kugel verwendeten Mess-Wärme-Batterie.

2. Methode nach Anspruch 1, nach der eine Korrektur des durch die Beleuchtung des Musters erhaltenen Wertes für den Weissgehalt erfolgt, wenn die Abweichung zwischen der bei der Eichung aufgezeichneten Leistung Ps und der bei der Messbeleuchtung aufgezeichneten Leistung höher ist als ein gegebener Wert.

3. Methode zur Bestimmung des Gesamt-Weissgehalts im Sonnenlicht nach einem der Ansprüche 1 oder 2, nach der ein Blitzrohr gewählt wird, dessen Spektralverteilung derjenigen der Sonneneinstrahlung am Boden in einsm Spektralband zwischen 0,3 und 2,5 My möglichst nahekommt.

4. Tragbares Gerät zur Messung des Gesamt-Weissgehalts eines Musters nach der in einem der Ansprüche 1 bis 3 beschriebenen Methode, das in einem ersten Gehäuse (2, 4) die Beleuchtungsquelle (5), optische Geräte mit Fokussierung (11) zur Lenkung eines ersten Teils des Lichtstroms der Beleuchtungsquelle auf einen Punkt (13) des Musters (14) und eine integrierende Kugel (3) mit drei Fenstern aufweist, von denen das erste (12) zum Einlass des in die Kugel einfallenden Lichtbündels, das zweite (19) zur Beleuchtung des Musters, dessen direkt reflektierte Strahlung ausserhalb der Anordnungsstellen der Fenster gelenkt wird und das dritte (20) zur Messung der Strahlung dient, dadurch gekennzeichnet, dass dieses dritte Fenster eine Mess-Wärme-Batterie (21) enthält, die auf den Frequenzbereich einer Blitzröhre (5) anspricht, die als Beleuchtungsquelle verwendet wird und weiter dadurch gekennzeichnet, dass eine Referenz-Wärme-Batterie (22), deren empfindliche Oberfläche in Richtung der Beleuchtungsquelle (5) gerichtet ist, in einen Block (2) eingebaut ist, der die integrierende Kugel (3) enthält.

5. Messgerät nach Anspruch 4, das in der Nähe der Beleuchtungsquelle (5) ein zweites Gehäuse (24) zur Versorgung der Beleuchtungsquelle mit Hochspannung und in der Nähe der integrierenden Kugel (3) ein drittes Gehäuse (23) zur Vorverstärkung der Mess-Wärme-Batterie (21) enthält, welche zur Bestimmung der Strahlung der integrierenden Kugel (3) verwendet wird, sowie der Mess-Wärme-Batterie (22), welche zur Bestimmung der Leistung verwendet wird, die direkt von einem zweiten Teil des Lichtstroms der Beleuchtungsquelle (5) durch eine Blende (10) aufgenommen wird, die von der Fokussierungsoptik (11) des ersten Teils des auf das Muster (14) einfallenden Lichtstroms benutzt wird.

## Claims

1. A method for an instantaneous determination of the absolute measure of the overall hemispherical reflectance of a sample to a given light, according to which the sample to be investigated is illuminated by means of an illumination source and optical means, the sample to be investigated being placed beforehand on a window of an integrating sphere, and according to which the radiation of the integrating sphere is investigated taking into account the known or determined power Ps of the illumination source, the parasitic luminous energy factor $K_p$ corresponding to the parasitic energy coming from the optical means in the absence of a sample, and the constant factor $K_o$ of luminous energy complying with the relation $V_{ET}=K_oPs$ wherein $V_{ET}$ is a voltage corresponding to the illumination of a calibrating sample having a known reflectance, characterized in that there is chosen as the illumination source a flash tube having the same spectral distribution as the given light or a spectral distribution as close thereto as wanted, in that there is chosen as means for measuring the exclusive overall radiation of said sphere a measuring thermopile, in that the determination of the values $V_{ET}=K_oPs$ and $K_p$ is made once for all by illuminating the calibrating sample having a known reflectance and by illuminating the sphere in the absence of a sample, the illuminating of any new sample, the reflectance of which is to be measured, being accompanied by the simultaneous recording of the voltages delivered by a reference thermopile directly receiving a fraction of the power from the illumination source and by the measuring thermopile used for the determination of the said radiation from the said integrating sphere.

2. A method according to claim 1, in which a correction is made of the reflectance value obtained by illuminating the sample when the difference between the power Ps recorded when calibrating and the power recorded when illuminating for a measurement exceeds a given value.

3. A method for determining the overall reflectance to solar light such as claimed in any of claims 1 and 2, according to which there is selected a flash tube having a spectral distribution akin to the ground-level spectral distribution of solar radiation in the band comprised between 0.3 $\mu$m and 2.5 $\mu$m.

4. A portable reflectometer for carrying out the method for measuring the overall reflectance of a sample as claimed in any of claims 1 to 3, comprising within a first housing (2, 4) the illumination source (5), optical means with a focusing optical system (11) for directing a first fraction of the luminous flux from the illumination source onto a point (13) of the sample (14) and an integrating sphere (3) provided with three windows, namely one (12) for the penetration of the incident beam into the sphere, another (19) for illuminating the sample, the direct reflected radiation of which is directed away from the positions of the windows, and a third window (20) for measuring the radiation, characterized in that said third window contains a measuring thermopile (21) responding to the frequency band of a flash tube (5) forming the illumination source, and in that a reference thermopile (22), the sensitive surface of which is directed towards the illumination source (5) is incorporated within a block (2) containing the integrating sphere (3).

5. A reflectometer such as claimed in claim 4 comprising, in the vicinity of the illumination source (5), a second housing (24) for a high-voltage supply to the illumination source and, in the vicinity of the integrating sphere (3), a third housing (23) for preamplification of the measuring thermopile (21) used for determining the radiation of the integrating sphere (3) and of the reference thermopile (22) used for determining the power received directly from a second fraction of the luminous flux from the source (5) across a diaphragm (10) used by the optical system (11) for focusing the first portion of the luminous flux upon the sample (14).